Europäisches Patentamt

**European Patent Office** (11) Publication number: **0 166 350**

**Office européen des brevets** **A2**

(12) **EUROPEAN PATENT APPLICATION**

(21) Application number: **85107465.8** (51) Int. Cl.⁴: **H 02 K 41/025, H 02 P 3/18**

(22) Date of filing: **14.06.85**

(30) Priority: **15.06.84 JP 121794/84**

(71) Applicant: **HITACHI, LTD., 6, Kanda Surugadai 4-chome Chiyoda-ku, Tokyo 100 (JP)**

(72) Inventor: **Tanamachi, Tokunosuke, 3600-455, Nakane, Katsuta-shi (JP)**
Inventor: **Ando, Takeki, 5378-5, Sugaya Nakamachi, Naka-gun Ibaraki-ken (JP)**
Inventor: **Shima, Seiya, 2298-12, Koya, Katsuta-shi (JP)**
Inventor: **Itoh, Masanobu, 13-3-3, Ishikawa Terasu Apartment House, 13-3, Ishikawacho Katsuta-shi (JP)**
Inventor: **Ibamoto, Masahiko, 434-2, Takeda, Katsuta-shi (JP)**

(43) Date of publication of application: **02.01.86 Bulletin 86/1**

(74) Representative: **Strehl, Schübel-Hopf, Schulz, Widenmayerstrasse 17 Postfach 22 03 45, D-8000 München 22 (DE)**

(84) Designated Contracting States: **DE GB**

(54) **Stop-positioning device for linear induction motor.**

(57) In a linear induction motor, three-phase coils (61, 62, 63) wound around a primary core (5) are excited according to a three-phase excitation mode for producing a shifting magnetic field thereby causing traveling movement of a secondary conductor (2), a plurality of perforations (21) are provided in the secondary conductor, and, when it is required to stop the secondary conductor at a desired stop position, current supply to the coil of one phase is interrupted by switches to change over the excitation mode to a single-phase excitation mode thereby producing a positioning force as a result of the coaction between magnetic fields and currents induced around the perforations (21).

STOP-POSITIONING DEVICE FOR

LINEAR INDUCTION MOTOR

BACKGROUND OF THE INVENTION

This invention relates to a linear induction motor, and more particularly to a device suitable for positioning a vehicle driven by a linear induction motor so as to accurately stop the vehicle at any one of desired stop positions.

Linear induction motors are now being applied more and more to article transport systems in offices, factories etc.

However, although the linear induction motor has the function of accelerating and decelerating a vehicle driven along rails, it has not the function of accurately stopping the vehicle at a desired stop position, that is, the so-called stop-positioning function, as is commonly known.

Therefore, the application of the linear induction motor to the article transport system described above involves a problem of this stop-positioning function.

Various devices for satisfying the stop-positioning requirement have been proposed hitherto. However, most of such devices have resorted to the provision of a mechanical contact mechanism between the vehicle and the rails for imparting a frictional force to the vehicle thereby braking and stopping the motion of the vehicle. Therefore, the prior art devices have been defective in that noise is inevitably generated, and the mechanism is also complex. Further, when highly accurate and close positioning accuracy is required, it has been unable for such a mechanical device to satisfy the required positioning accuracy.

With a view to obviate the defect of the mechanical device, a device for achieving the stop-positioning of the vehicle driven by the linear induction motor without resorting to the mechanical contact mechanism or in a contactless fashion has been proposed recently, as disclosed in, for example, Japanese Patent un-examined publications No. 57-3588 published on January 9, 1982, and No. 57-6561 published on January 13, 1982, both in the name of Fuji Telecommunication Co. According to the proposed device, a single-phase coil for stop-positioning purpose is disposed adjacent to each of desired stop positions for the vehicle, and the required one of the single-phase coils is energized to stop the vehicle at the associated desired stop position. Therefore, the proposed device has been excellent over those resorting to the mechanical contact machanism in that the vehicle can be stopped at any one of the desired stop positions without the use of the mechanical contact mechanism. However, the proposed device has been defective in that the exclusive single-phase coil must be provided for each of the desired stop positions, resulting in a complex and expensive structure.

SUMMARY OF THE INVENTION

It is a primary object of the present invention to provide a stop-positioning device which can position a vehicle driven by a linear induction motor to stop it at any one of desired stop positions with high accuracy in spite of a simple and inexpensive structure.

It is an important feature of the device of the present invention that a secondary conductor of a linear induction motor driving a vehicle is formed with at Ieast one perforation, and, when the vehicle is to be stopped at any one of desired stop positions, an excitation system exciting three-phase coils wound around a primary core is changed over from a three-phase excitation mode producing a shifting magnetic field to a single-phase excitation mode, thereby producing the force required for stopping the vehicle at the specific stop position.

Besides the above-described features, means for more simply achieving stop-positioning with better accuracy are provided in preferred embodiments which will be described later. Those objects and features will be described in detail with reference to the drawings illustrating the embodiments.

BRIEF DESCRIPTION OF THE DRAWINGS

Fig. 1 shows schematically the structure of a linear induction motor to which the present invention is applied.

Figs. 2 to 5 show an embodiment of the present invention, wherein Fig. 2 shows the internal structure of the linear induction motor; Fig. 3 is a side elevation view of the secondary conductor; Fig. 4 is a connection diagram of the three-phase coils; and Fig. 5 illustrates the stop-positioning operation.

Figs. 6 to 8 show another embodiment of the present invention, wherein Fig. 6 is a side elevation view of the secondary conductor; Fig. 7 is a connection diagram of the three-phase coils; and Fig. 8 illustrates the stop-positioning operation.

DESCRIPTION OF THE PREFERRED EMBODIMENTS

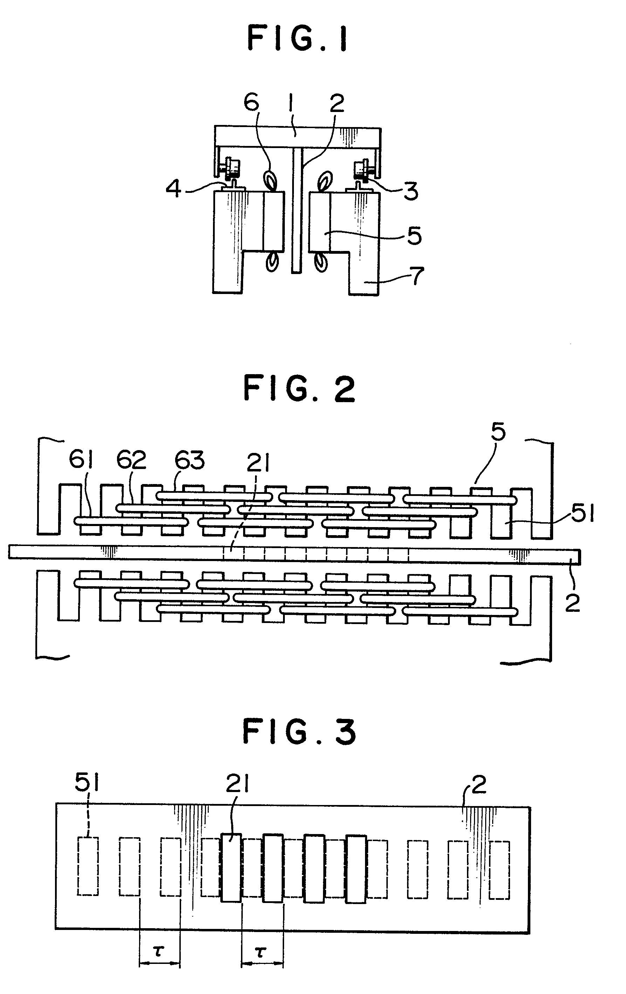

A preferred embodiment of the present invention will now be described in detail with reference to Figs. 1 to 5.

Fig. 1 is a front elevation view showing schematically the general structure of a linear induction motor. The linear induction motor includes a secondary conductor 2, a primary iron core 5 and three-phase coils (primary coils) 6 wound around the primary core 5. A vehicle 1 is mounted on the secondary conductor 2 of the linear induction motor and has wheels 3 making rolling engagement with rails 4 guiding traveling movement of the vehicle 1. The primary core 5 of the linear induction motor is fixed to a supporting base 7. As is well known, the three-phase coils 6 are excited to produce a shifting magnetic field thereby causing

0166350

traveling movement of the vehicle 1 mounted on the secondary conductor 2.

Fig. 2 is a plan view showing the internal structure of the linear induction motor to which an embodiment of the present invention is applied. As well known, such linear induction motors are provided along the rail road at suitable intervals. Referring to Fig. 2, the primary core 5 includes teeth 51 disposed on both sides of the secondary conductor 2 formed with a plurality of perforations 21 having a rectangular cross-section in its middle portion as shown by dotted lines, and the three-phase coils 6 include a U-phase coil 61, a V-phase coil 62 and a W-phase coil 63.

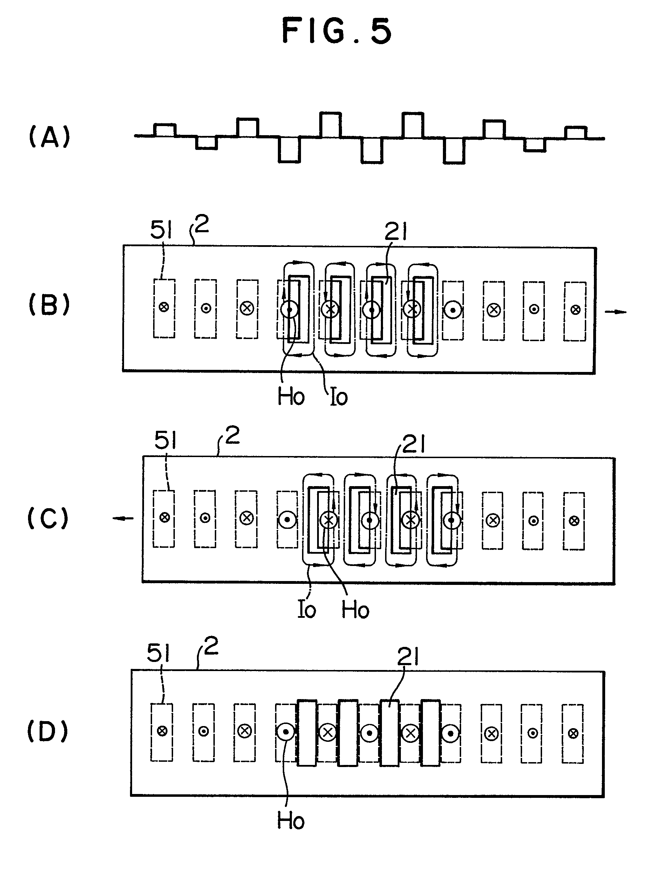

Fig. 3 is a side elevation view of the secondary conductor 2 shown in Fig. 2. It will be seen in Fig. 3 that the pitch τ of the perforations 21 of the secondary conductor 2 is equal to the pitch τ of the teeth 51 of the primary core 5. The length of the rectangular cross-section of the perforation measured in the transverse direction of the secondary conductor 2 may be equal to or longer than the length of the rectangular tooth 51. Further, the width of the perforation is illustrated in Fig. 5 to be substantially equal to the distance between two teeth, but the width may be different from the distance between two teeth.

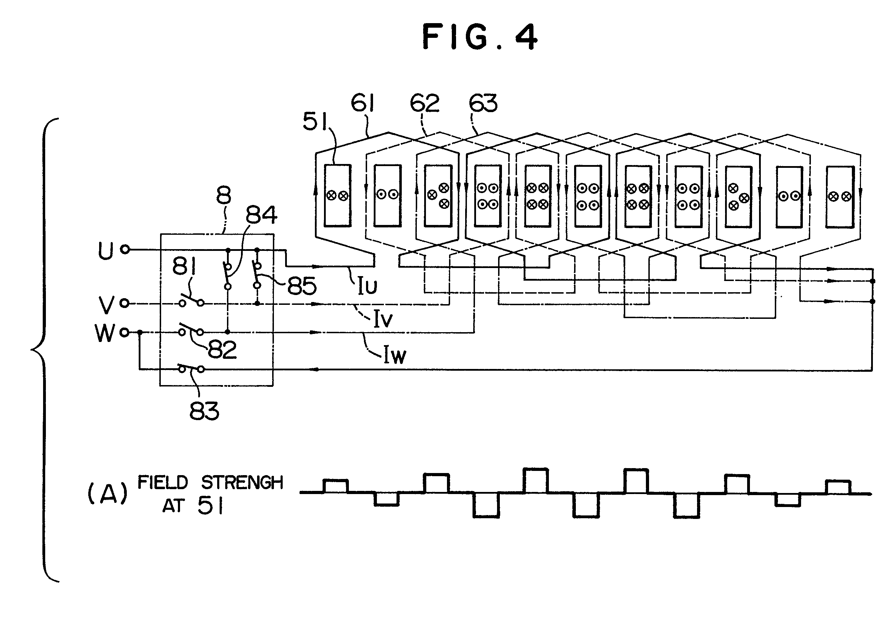

Fig. 4 is a connection diagram of the U-phase coil 61, V-phase coil 62 and W-phase coil 63 of the three-phase coils 6. A change-over circuit 8 in Fig. 4 includes switches 81 to 85 to change over the mode of excitation of the U-phase, V-phase and W-phase coils 61, 62 and 63 between a three-phase excitation mode and a single-phase excitation mode. More precisely, during acceleration and deceleration of the vehicle 1, the switches 81 and 82 are closed, while the switches 83, 84 and 85 are opened in the change-over circuit 8 to establish the three-phase excitation mode for producing a shifting magnetic field. On the other hand, when the vehicle 1 is to be stopped at one of desired stop positions, the switches 81 and 82 are opened, while the switches 83, 84 and 85 are closed in the change-over circuit 8 to establish the single-phase excitation mode for producing a stationary magnetic field. Fig. 4 illustrates the single-phase excitation mode of the linear induction motor. In this mode, currents $I_U$, $I_V$ and $I_W$ flow through the U-phase, V-phase and W-phase coils 61, 62 and 63 respectively in directions as, for example, shown in Fig. 4, and magnetic fields are produced alternately from the teeth 51 of the primary core 5 in directions indicated by the symbols $\otimes$ (from the front toward the back of the drawing sheet) and $\odot$ (from the back toward the front of the drawing sheet) in Fig. 4. As graphically shown in Fig. 4(A), the strength of the produced magnetic fields is smallest at the both ends of the primary core 5, while it becomes progressively larger up tp the maximum and uniform in the middle portion of the primary core 5.

Fig. 5 illustrates the stop-positioning operation of the embodiment of the present invention. The operation according to the present invention will be described with reference to Fig. 5.

Suppose that magnetic fields as shown in Fig. 5(A) (which is the same as Fig. 4(A)) are produced from the teeth 51 of the primary core 5. Suppose further that the positional relationship between the perforations 21 of the secondary conductor 2 and the corresponding theeth 51 of the primary core 5 is as shown in Fig. 5(B). In such a case, the lines of magnetic fields Ho produced by the teeth 51 of the primary core 5 pass through the perforations 21 of the secondary conductor 2, and a current Io for cancelling the magnetic field Ho produced by the corresponding tooth 51 of the primary core 5 flows around each of the perforations 21 of the secondary conductor 2, as shown in Fig. 5(B). Consequently, according to the Fleming's left-hand rule, the coaction between the currents Io and the magnetic fields Ho produces a rightward force which acts to urge the secondary conductor 2 rightward. Similarly, the secondary conductor 2 is urged leftward when the positional relationship between the perforations 21 of the secondary conductor 2 and the teeth 51 of the primary core 5 is as shown in Fig. 5(C). Therefore, the secondary conductor 2 stops at a position as shown in Fig. 5(D) where no magnetic fluxes pass through any of the perforations 21 of the secondary conductor 2. Since the strength of the force acting upon the secondary conductor 2 is proportional to the number of the perforations 21, the accuracy in stopping the secondary conductor 2 and, hence, the vehicle 1 at the desired stop position can be enhanced in proportion to the number of the perforations 21. It will be seen from Fig. 5 that the condition where no magnetic fluxes pass through any of the perforations occurs when the secondary conductor 2 is moved from the position shown in Fig. 5 rightward or leftward by a distance corresponding to one pitch $\tau$ of the teeth 51. Therefore, in order to stop the secondary conductor 2 at the position shown in Fig. 5(D), it is required to decelerate the secondary conductor sufficiently such that the moving force of the secondary conductor by inertia is smaller than the rightward or leftward force produced by the coaction between the currents Io and the magnetic fields Ho as above-mentioned, when the secondary conductor reaches the position as shown in Fig. 5(B) or 5(C). This deceleration is done by reversed three-phase excitation of the U-phase, V-phase and W-phase coils 61, 62 and 63 in a well-known manner.

Thus, according to the aforementioned embodiment of the present invention, the secondary conductor 2 and, hence, the vehicle 1 can be positioned to be stopped at a predetermined stop position with high accuracy without resorting to a mechanical contact mechanism.

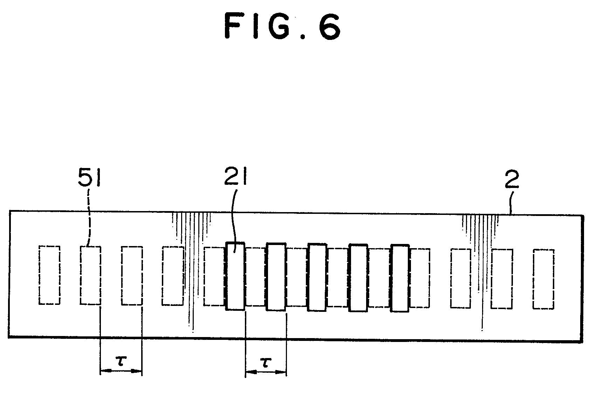

Another embodiment of the present invention will be described in detail with reference to Figs. 6 to 8.

This second embodiment is the same as the first embodiment in the point that the single-phase excitation mode is established at the time of stop-positioning, but differs from the first embodiment in the manner of single-phase excitation.

That is, the first embodiment is based on such an idea that a satisfactory positioning force can be obtained by alternately changing the directions of the magnetic fields produced by the teeth 51 of the primary core 5, and the combination of the switches 83 to 85 is used for establishing the single-phase excitation mode. However, it has been discovered that a greater positioning force can be provided by merely interrupting current supply to the coil of one phase among the three-phase coils. The second embodiment is featured by the utilization of such a discovery.

The arrangement shown in Figs. 1 and 2 is fundamentally employed in this second embodiment, too. Therefore, the same reference numerals are used in Figs. 6 to 8 to designate the same or equivalent parts appearing in Figs. 1 to 5, and the parts corresponding to those shown in Figs. 3 to 5 will be described with reference to Figs. 6 to 8.

Fig. 6 is a side elevation view of the secondary conductor 2. The secondary conductor 2 shown in Fig. 6 is the same as that shown in Fig. 3 except that five perforations 21 are provided for conveniences of later description.

- 10 -                    Ü166350

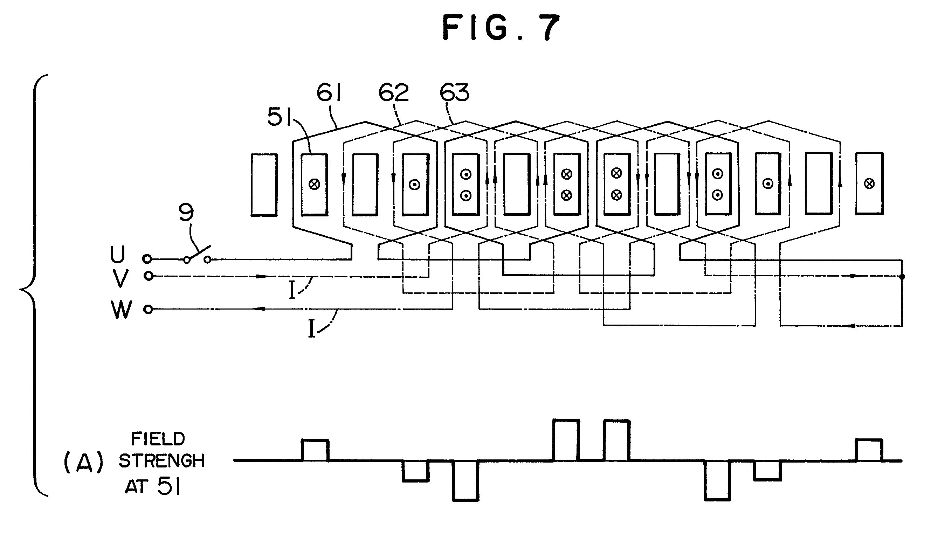

Fig. 7 is a connection diagram of the U-phase coil 61, V-phase coil 62 and W-phase coil 63 of the three-phase coils 6. A switch 9 is provided to change over the mode of excitation of the U-phase, V-phase and W-phase coils 61, 62 and 63 between the three-phase excitation mode and the single-phase excitation mode. More precisely, during acceleration and deceleration of the vehicle 1, the switch 9 is closed for the three-phase excitation of the U-phase, V-phase and W-phase coils 61, 62 and 63 thereby producing a shifting magnetic field. On the other hand, when the vehicle 1 is to be stopped at one of desired stop positions, the switch 9 is opened to cease the excitation of the U-phase coil 61 and to excite the V-phase and W-phase coils 62 and 63 according to the single-phase excitation mode thereby producing a stationary magnetic field. In this single-phase excitation mode, currents I flow through the V-phase and W-phase coils 62 and 63 in directions as, for example, shown in Fig. 7, and magnetic fields are produced alternately from the teeth 51 of the primary core 5 in directions as indicated by the symbols $\otimes$ (from the front toward the back of the drawing sheet) and $\odot$ (from the back toward the front of the drawing sheet) in Fig. 7. The strength of the magnetic fields is as graphically shown in Fig. 7(A).

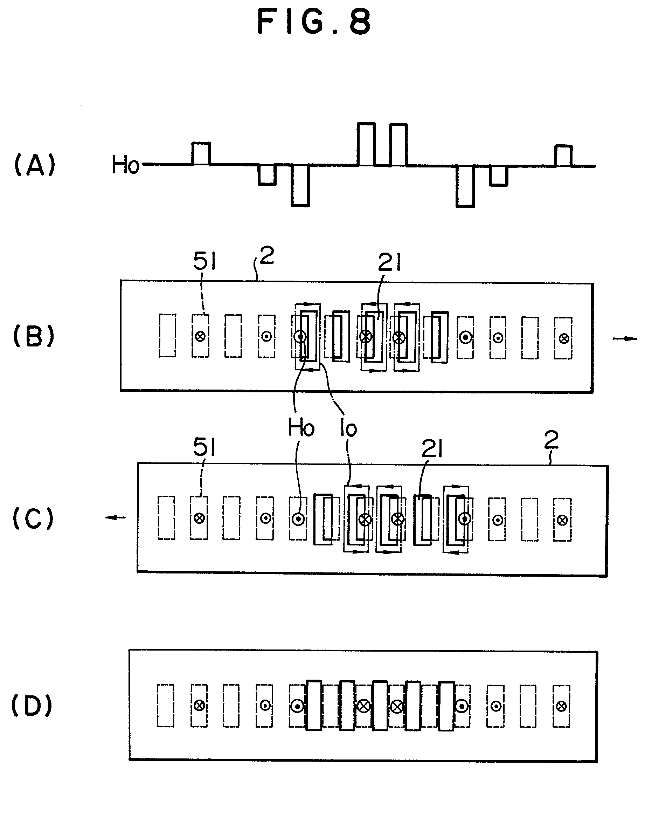

Fig. 8 illustrates the stop-positioning operation of the second embodiment of the present invention. Suppose that magnetic fields Ho as shown in

0166350

Fig. 8(A) (which is the same as Fig. 7(A)) are produced from the teeth 51 of the primary core 5. Suppose further that the positional relationship between the perforations 21 of the secondary conductor 2 and the teeth 51 of the primary core 5 is as shown in Fig. 8(B). In such a case, the lines of magnetic fields Ho produced by the teeth 51 of the primary core 5 pass through the 1st, 3rd and 4th perforations 21 of the secondary core 2 counted from the left-hand side among the five perforations 21 shown by the solid lines, and a current Io for cancelling the magnetic field Ho produced by the corresponding tooth 51 of the primary core 5 flows around each of those perforations 21 of the secondary conductor 2, as shown in Fig. 8(B). Consequently, according to the Fleming's left-hand rule, the coaction between the currents Io and the magnetic fields Ho produces a rightward force which acts to urge the secondary conductor 2 rightward. On the other hand, when the positional relationship between the perforations 21 of the secondary conductor 2 and the teeth 51 of the primary core 5 is as shown in Fig. 8(C), the lines of magnetic fields Ho produced by the teeth 51 of the primary core 5 pass through the 2nd, 3rd and 5th perforations 21 of the secondary conductor 2 counted from the left-hand side among the five perforations 21 shown by the solid lines, and a current Io for cancelling the magnetic field Ho produced by the corresponding tooth 51 of the primary core 5 flows around each of those

- 12 -  0166350

perforations 21 of the secondary conductor 2, as shown in Fig. 8(C). Consequently, according to the Fleming's left-hand rule, the coaction between the currents Io and the magnetic fields Ho produces a leftward force which acts to urge the secondary conductor 2 leftward. Therefore, the secondary conductor 2 stops at a position as shown in Fig. 8(D) where no magnetic field lines pass through the perforations 21 of the secondary conductor 2.

It is apparent that, for the purpose of carrying out such a stop-positioning operation, there may be at least one perforation 21 instead of five referred to in the second embodiment of the present invention. Thus, for example, the 3rd perforation 21 counted from the left-hand side in Fig. 8 may only be provided in the secondary conductor 2, or the 1st and 2nd perforations 21 counted from the left-hand side in Fig. 8 may only be provided in the second conductor 2. It is apparent that, until the secondary conductor 2 is positioned to be stopped at a predetermined stop position in a manner as illustrated in Figs. 8(B) to 8(D), the U-phase, V-phase and W-phase coils 61, 62 and 63 are placed in the three-phase excitation mode to reduce the speed of the secondary conductor 2 to a predetermined speed.

It will be understood from the above description of the second embodiment of the present invention that a considerably large force can be imparted to the

- 13 - 0166350

secondary conductor (the vehicle) by merely interrupting current supply to the coil of one phase among the three-phase coils and exciting the remaining coils of two phases according to the single-phase excitation mode when the vehicle is to be stopped at one of desired stop positions.  Thus, the vehicle can be reliably stopped at the desired stop position with high accuracy without resorting to a mechanical contact mechanism.

The aforementioned embodiments of the present invention have referred to the case where the excitation mode is simply changed over between the three-phase excitation mode and the single-phase excitation mode by the switches 81 to 85 and 9.  However, replacement of these switches 81 to 85 and 9 by bi-directional control elements well known in the art can be very easily effected. In this case, the force for driving the vehicle and the force for stop-positioning the vehicle can be controlled by controlling the duty factor of the currents supplied to those bi-directional control elements thereby controlling the three-phase excitation voltage and single-phase excitation voltage, so as to attain more flexible and finer control.  This will be readily understood from the general theory of control.

- 14 -

0166350

CLAIMS

1.     In a linear induction motor including three-phase coils (61, 62, 63) wound around a primary core (5), a three-phase AC power source (U, V, W) exciting said three-phase coils according to a three-phase excitation mode, and a secondary conductor (2) shifted by a shifting magnetic field produced by said three-phase coils as a result of excitation according to said three-phase excitation mode, a stop-positioning device comprising at least one perforation (21) provided in said second conductor, and means (81-85, 9) for exciting said three-phase coils according to a single-phase excitation mode when said second conductor is to be stopped at any one of desired stop positions.

2.     A stop-positioning device as claimed in Claim 1, wherein said second conductor (2) is formed with a plurality of perforations (21).

3.     A stop-positioning device as claimed in Claim 2, wherein the pitch of said plural perforations (21) is equal to that of a plurality of teeth (51) constituting said primary core (5).

4.     A stop-positioning device as claimed in any of claims 1 to 3, wherein said single-phase excitation means (81-85, 9) functions to alternately change the directions of magnetic fields produced by a plurality of teeth (51) constituting said primary core (5).

5.     A stop-positioning device as claimed in any of claims 1 to 3, wherein said single-phase excitation means (81-85, 9)

- 15 -

0166350

functions to interrupt current supply to the coil of one phase among said three-phase coils (61, 62, 63) and to excite the remaining coils of two phases according to the single-phase excitation mode.

6.      A stop-positioning device as claimed in any of claims 1 to 5, wherein said secondary conductor (2) is coupled to a vehicle (1), rails (4) are laid along the path of article transportation by said vehicle, and wheels (3) are provided on said vehicle so that said vehicle can travel on said rails.

# FIG. I

# FIG. 2

# FIG. 3

# FIG. 4

(A) FIELD STRENGH AT 51

# FIG. 5

(A)

(B)

51  2  21

Ho  Io

(C)

51  2  21

Io  Ho

(D)

51  2  21

Ho

# FIG.6

# FIG. 7

(A) FIELD STRENGH AT 51

# FIG. 8

(A)

(B)

(C)

(D)